# EUROPEAN PATENT SPECIFICATION

(11) **EP 3 233 532 B1**
(45) Date of publication and mention of the grant of the patent: **04.09.2019**
(21) Application number: 15823794.1
(22) Date of filing: 17.12.2015
(51) Int. Cl.: B60C 9/00, B60C 9/20

(54) **TYRE FOR VEHICLE WHEELS**
REIFEN FÜR FAHRZEUGRÄDER
PNEU POUR ROUES DE VÉHICULE

(30) Priority: 18.12.2014 IT MI20142173
(43) Date of publication of application: 25.10.2017
(73) Proprietor: Pirelli Tyre S.p.A., 20126 Milano (IT)
(72) Inventor: DAGHINI, Guido Luigi, I-20126 Milano (IT); TRESOLDI, Stefano, I-20126 Milano (IT); GARRO, Luciano, 20126 Milano (IT); BOLGIAGHI, Davide, 64747 Breuberg (DE); AGRESTI, Simone, I-59100 Prato (IT)
(74) Representative: Porta & Consulenti Associati S.p.A.
(86) International application number: PCT/IB2015/059712
(87) International publication number: WO 2016/098035

(56) References cited:
- EP-A1- 0 672 546
- EP-A2- 1 457 596
- DE-A1-102010 000 050
- DE-U1- 8 414 361
- JP-A- H09 156 314
- US-A- 5 285 623

## Description

The present invention relates to a tyre for vehicle wheels.

Preferably, the tyre of the invention is a HP (High Performance) or UHP (Ultra High Performance) tyre intended to equip vehicles of the sedan, minivan, family car, SUV (Sport Utility Vehicle) and/or CUV (Crossover Utility Vehicle) type mainly for transporting people. Typically, such a tyre allows travel speeds higher than at least 160 km/h.

The terms SUV and CUV are used to indicate high-clearance vehicles, typically four wheel drive, having capacity piston displacement equal to or greater than 1800 cc, more preferably comprised between 2000 cc and 6200 cc. Preferably, such vehicles have a mass greater than 1400 Kg, more preferably comprised between 1500 Kg and 3000 Kg.

The tyre of the invention can be used as a summer, winter or "all season" tyre.

High and ultra-high performance tyres, which are commonly defined as "HP" or "UHP" tyres, are in particular those that allow speeds higher than 200 km/h up to more than 300 km/h to be reached. Examples of such tyres are those belonging to classes "T", "U", "H", "V", "Z","W", "Y", according to E.T.R.T.O. - (European Tyre and Rim Technical Organisation) standards and racing tyres, in particular for high power four-wheeled vehicles. Typically, tyres belonging to such classes have a section with a width equal to or greater than 185 mm, preferably not greater than 325 mm, more preferably comprised between 195 mm and 325 mm. Such tyres are preferably mounted on rims having fitting diameters equal to or greater than 16 inches, preferably not greater than 24 inches, more preferably comprised between 17 inches and 22 inches.

In the present description and in the following claims, the following definitions apply.

The term "equatorial plane" of the tyre is used to indicate a plane perpendicular to the rotation axis of the tyre and that divides the tyre into two symmetrically identical parts.

The terms "radial" and "axial" and the expressions "radially inner/outer" and "axially inner/outer" are used with reference to a direction perpendicular and a direction parallel to the rotation axis of the tyre, respectively.

The terms "circumferential" and "circumferentially", on the other hand, are used with reference to the direction of annular extension of the tyre, i.e. to the rolling direction of the tyre, which corresponds to a direction laying on a plane coinciding with or parallel to the equatorial plane of the tyre.

The term "elastomeric material" is used to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked through heating.

The term "cord", or the expressions "reinforcing cord" or "reinforcing element" are used to indicate an element consisting of one or more thread-like elements (hereinafter also called "wires") coated with, or incorporated in, a matrix of elastomeric material. Depending on the circumstances and the specific applications, the aforementioned thread-like elements can be made from textile and/or metallic material.

The term "diameter" or "thickness" of a cord or of a wire is used to indicate the thickness of the cord or of the wire measured as prescribed by the method BISFA E10 (The International Bureau For The Standardization Of Man-Made Fibres, Internationally Agreed Methods For Testing Steel Tyre Cords, 1995 edition).

The area of the section of a cord is calculated geometrically by multiplying the number of wires included in the cord by the geometric section of each wire, for example in the case of identical wires A= n_{wires}*d²*π/4 where A is the area of the section of the cord, n_{wires} is the number of wires included in the cord, d is the diameter of the wire and π is the Greek P constant.

The expression "elongation at break" of a reinforcing cord is used to indicate the percentage elongation at which breaking occurs, evaluated with the method BISFA E6 (The International Bureau For The Standardization Of Man-Made Fibres, Internationally Agreed Methods For Testing Steel Tyre Cords, 1995 edition).

The expression "Breaking energy" of a reinforcing cord is used to indicate the energy necessary to break the reinforcing cord, evaluated by calculating the area subtended by the traction curve through the incremental ratio method obtained with the method BISFA E6 (The International Bureau For The Standardization Of Man-Made Fibres, Internationally Agreed Methods For Testing Steel Tyre Cords, 1995 edition).

The expression "Taber Stiffness", is used to indicate the stiffness defined as the flexing moment and evaluated through a Taber testing device according to the standard BISFA E8 (The International Bureau For The Standardization Of Man-Made Fibres, Internationally Agreed Methods For Testing Steel Tyre Cords, 1995 edition). The unit of measurement of such stiffness is indicated with "TSU" (Taber Stiffness Unit).

The expression "Plunger test", is used to indicate a resistance test of the tyre carried out through compression of a plunger moving slowly until the tyre breaks. In the present case, the test was carried out according to the method FMV SS 139 (National highway traffic safety administration, department of transportation. Part 571 - Federal Motor Vehicle Safety Standards: Subpart B).

The term "rolling resistance" is used to indicate a force that opposes the rolling of a tyre and in more general terms the energy consumed by the rolling tyre per unit of distance travelled. The measurement of the rolling resistance can be carried out according to the standard ISO28580.

A tyre for vehicle wheels typically comprises a carcass structure, a belt structure arranged in radially outer position with respect to the carcass structure and a tread band arranged in a radially outer position with respect to the belt structure and through which the contact of the tyre with the road surface takes place.

Both the carcass structure and the belt structure typically comprise a plurality of reinforcing cords, made of textile or metallic material, incorporated in a matrix of elastomeric material.

Reinforcing cords can be used in other components of the tyre, like for example in the bead structure (both as annular anchoring element and as side reinforcing layer or as layer surrounding the bead itself) and, in the specific case of use on heavy vehicles, in stone-guard strips and/or in side reinforcing strips of the belt structure.

EP 0 237 462, US 2012/0067487, EP 0849098 and US 5,779,829 describe various constructions of reinforcing cords which can be used in tyres for vehicle wheels.

JP H09 156314 describes a large radial tyre comprising a belt formed by laminating belt plies, which are reinforced by steel cords arranged at an inclination to the tyre circumferential direction. The steel cord has a two-layer structure that is composed of a core, formed by arranging in parallel two core wires, and an outer layer formed by bringing 5-8 outer wires that have 0.8-1.2 times the diameter of the core wires into close contact with the core and winding them in a spiral shape.

DE 10 2010 000050 relates to a steel cord for use as a reinforcing element in components for pneumatic vehicle tyres comprising an inner ply of at least one core filament of tensile strength between 3200 and 3500 N/mm² and at least one ply of encasing filaments of tensile strength greater than 3800 N/mm².

### SUMMARY OF THE INVENTION

The Applicant has for a long time used, in the belt structure of its HP and UHP tyres metallic, reinforcing cords comprising steel wires.

The wires of the metallic cords are preferably made of NT (Normal Tensile), HT (High tensile), ST (Super Tensile) or UT (Ultra Tensile) steel. Typically, such steel wires have a carbon content lower than about 1%. Preferably, the carbon content is greater than or equal to about 0.7%, even more preferably the carbon content is comprised between about 0.7% and about 0.9%. The wires are typically coated with brass or another corrosion-resistant coating (for example Zn/Mn).

The term NT "Normal Tensile Steel" is used to indicate a carbon steel wire having an ultimate tensile strength equal to about 2800 ± 200 MPa, for example having an ultimate tensile strength equal to at least about 2700 MPa for a wire having a diameter equal to 0.28 mm.

The term HT "High Tensile Steel " is used to indicate a carbon steel wire having an ultimate tensile strength equal to about 3200 ± 200 MPa, for example an ultimate tensile strength equal to at least about 3100 MPa for a wire having a diameter equal to 0.28 mm.

The term ST "Super Tensile Steel" is used to indicate a carbon steel wire having an ultimate tensile strength equal to about 3500 ± 200 MPa, for example an ultimate tensile strength equal to at least about 3400 MPa for a wire having a diameter equal to 0.28 mm.

The term UT "Ultra Tensile Steel" is used to indicate a carbon steel wire having an ultimate tensile strength equal to about 3900 ± 200 MPa, for example an ultimate tensile strength equal to at least about 3800 MPa for a wire having a diameter equal to 0.28 mm.

The tolerances ± 200 MPa are indicated to comprise, for each class of steel, the minimum and maximum values of tensile strength due to the various diameters of the wire (the tensile strength value is typically inversely proportional to the diameter of the wire), for example for wire diameters comprised between about 0.12 mm and about 0.40 mm.

A first type of reinforcing cords used by the Applicant is of the type 2+1x0.28. Such a reinforcing cord consists of two straight wires made of steel, in particular NT (Normal Tensile) steel with a carbon content equal to about 0.70 % by weight (C70) with a percentage tolerance equal to ± 0.2%-0.3%, on which a further wire is helically wound, also made of NT steel and carbon content C70, with a winding pitch equal to 16 mm. The wires of this reinforcing cord all have a diameter equal to 0.28 mm.

The area of the section of these cords is equal to about 0.185 mm² and a Taber stiffness equal to about 35 TSU. Working with density and type of steel it is possible to obtain different stiffness. However the Applicant has substantially found that due to their high stiffness such reinforcing cords give the belt structure of the tyre excellent mechanical characteristics, in terms both of integrity and of structural strength. Therefore, they are suitable for making particularly strong belt structures.

The Applicant has, however, found that tyres in which such a type of reinforcing cords is used have a rolling resistance and a drivability that, in the attempt to achieve a reduction in consumption and driving response and comfort, should be improved. Moreover, high stiffness inevitably penalises comfort.

A second type of reinforcing cords used by the Applicant in its HP and UHP tyres is of the type 3x0.22HT. Such a reinforcing cord consists of three wires made of HT (High Tensile) steel. The three steel wires are twisted together with a winding pitch equal to 12.5 mm and all have a diameter equal to 0.22 mm.

The reinforcing cords of the type 3x0.22 are much lighter and thinner than those of the type 2+1x0.28. Indeed, the area of the section of these cords is equal to 0.114 mm² and thus allow particularly light belt structures to be made. The amount of steel of the cords of the type 3x0.22 is much lower than that of the cords of the type 2+1x0.28 and it is considered advisable to provide for higher densities and steels of greater strength to approximate the mechanical properties of the latter, even if it is not possible to reach them. The density is typically limited by the minimum space that can be reached between the cords which must stay a minimum distance apart in order to avoid fretting, i.e. wearing from sliding.

The belt structures comprising reinforcing cords of the type 3x0.22 have lower mechanical characteristics, in terms both of integrity and of structural strength, with respect to those of belt structures comprising reinforcing cords of the type 2+1x0.28.

The Applicant has found that tyres in which reinforcing cords of the type 3x0.22HT are used have a better rolling resistance with respect to that of tyres in which reinforcing cords of the type 2+1x0.28 are used, thanks to the low thicknesses of the fabrics formed with such cords.

The cord 3x0.22HT has a Taber stiffness equal to 15 TSU, i.e. much lower than that of cords of the type 2+1x0.28. According to the Applicant such a lower stiffness leads to both better drivability because it allows the tread to adapt better to the roughness of the road, and better comfort, because the tyre tends to absorb such roughness.

The Applicant thought to the problem of making HP and UHP tyres having better mechanical characteristics than those of tyres in which reinforcing cords of the type 3x0.22 are used and, at the same time, characteristics of rolling resistance, drivability and comfort that are better than those of tyres in which reinforcing cords of the type 2+1x0.28 are used.

The Applicant observed that EP 0 237 462 describes the use, in belt structures of tyres, of reinforcing cords of the type 2x0.30HT, i.e. obtained by twisting together two wires of diameter equal to 0.30 mm. Such reinforcing cords are lighter and thinner than those of the type 2+1x0.28; in particular, the area of the section of these cords is equal to about 0.141 mm² and their weight is intermediate between that of cords of the type 3x0.22 and that of cords of the type 2+1x0.28. The Applicant has found that, being equal the density of the reinforcing elements in the belt layer, tyres in which reinforcing cords of the type 2x0.30HT are used have mechanical characteristics only slightly lower than the excellent ones of tyres in which reinforcing cords of the type 2+1x0.28 are used (the Taber stiffness measured on the 2x0.30HT is equal to 30 TSU). However, such tyres have a better rolling resistance than that of tyres in which reinforcing cords of the type 2+1x0.28 are used and comparable properties of drivability and comfort.

Achieving better mechanical characteristics than those of tyres in which reinforcing cords of the type 3x0.22 are used and, at the same time, characteristics of rolling resistance, drivability and comfort that are better than those of tyres in which reinforcing cords of the type 2+1x0.28 are used, thus seemed to be an impossible task due to the contrasting effects to be obtained with the specific reinforcing cords used.

The Applicant focused its attention on reinforcing cords comprising only two wires. Such cords, indeed, allow wires having a not excessively small size to be used, which would otherwise be too expensive, moreover allowing reinforcing layers of limited thickness to be made.

The Applicant observed that typically cords with two wires, like for example the one of the type 2x0.30 discussed above, comprise two wires of equal diameter twisted together. According to the Applicant, where a twisting process of the wires is foreseen, it is advisable to use wires of equal diameter in order to ensure the desired geometric regularity of the cord and/or the absence of structural defects on the tyre, which would constitute possible points of concentration of tension and, therefore, possible breaking areas of the material.

The Applicant also observed that, being equal the number of wires, the structural characteristics and the behaviour of the reinforcing cord can be correlated to the diameter of the wires, wherein small diameters are preferable when it is desired to obtain optimal behaviour in terms of rolling resistance, drivability and comfort and larger diameters are preferable when it is desired to obtain optimal behaviour in terms of structural strength and integrity.

The Applicant thus realised that it would be extremely promising to be able to use cords having two wires having different diameter, so as to try to obtain the most possible number of desired characteristics. In particular, the Applicant thought that it would have been extremely advantageous to be able to use a wire having a smaller diameter to obtain the desired characteristics of rolling resistance, drivability and comfort, and a wire having a greater diameter to obtain the desired characteristics of integrity and structural strength.

The Applicant however observed that, at process level, twisting together two wires having different diameter is more complex than twisting together wires having the same diameter. Moreover, the cord formed from two wires having different diameter provides the reinforcing layer with a pronounced flexibility that is thought to be connected to the torsions which the wires are subjected to during twisting, in particular the wire having a smaller diameter.

The Applicant found that it is possible to obtain excellent characteristics of rolling resistance, drivability, comfort, integrity and structural strength in a tyre by making its belt structure through the use of reinforcing cords comprising wires having different diameter, made by keeping one wire straight and helically winding the other wire on the straight wire, and in particular helically winding the wire having greater diameter on the wire having smaller diameter.

The present invention therefore relates to a tyre for vehicle wheels, comprising at least one reinforcing layer having a plurality of reinforcing cords, wherein each reinforcing cord of said plurality of reinforcing cords comprises a first wire having a first diameter and a second wire having a second diameter greater than the first diameter.

Preferably, the first wire is a metallic wire.

Preferably, the second wire is a metallic wire.

Preferably, the first wire is substantially straight. In this context, the expression "substantially straight" is used to indicate the fact that any longitudinal portion of the wire extends along a longitudinal direction that is the same as that along which all of the other longitudinal portions of the same wire extend, apart from small unforeseeable lateral differences.

Preferably, the second wire is helically wound around the first wire with a predetermined winding pitch.

Preferably, the difference between the second diameter and the first diameter is greater than or equal to about 0.03 mm, more preferably greater than or equal to about 0.04 mm.

Preferably, the difference between the second diameter and the first diameter is lower than or equal to about 0.09 mm, more preferably lower than or equal to about 0.08 mm.

In preferred embodiments, the difference between the second diameter and the first diameter is comprised between about 0.03 mm and about 0.09 mm, more preferably between about 0.04 mm and about 0.08 mm.

Preferably, the ratio between the second diameter and the first diameter is greater than or equal to about 1.12, more preferably greater than or equal to about 1.15.

Preferably, the ratio between the second diameter and the first diameter is lower than or equal to about 1.55, more preferably less than or equal to about 1.5.

In preferred embodiments, the ratio between the second diameter and the first diameter is comprised between about 1.12 and about 1.55, more preferably between about 1.15 and about 1.5.

The ratio between the diameters of the second wire and of the first wire is correlated to the absolute value of the two diameters in the sense that as they decrease the ratio increases.

Preferably, in cases in which the second wire has a diameter lower than or equal to about 0.30 mm, the ratio between the second diameter and the first diameter is greater than or equal to about 1.25, preferably comprised between about 1.30 and about 1.46.

Preferably, in cases in which the second wire has a diameter greater than about 0.30 mm, the ratio between the second diameter and the first diameter is less than or equal to about 1.30, preferably comprised between about 1.25 and about 1.15.

Preferably, in cases in which the second wire has a diameter equal to about 0.30 mm, the ratio between the second diameter and the first diameter is substantially equal to about 1.36.

Preferably, the first diameter is lower than or equal to about 0.32 mm, more preferably lower than or equal to about 0.30 mm.

Preferably, the first diameter is greater than or equal to about 0.12 mm, more preferably greater than or equal to about 0.15 mm.

Preferably, the first diameter is comprised between about 0.12 mm and about 0.32 mm, more preferably between about 0.15 mm and about 0.30 mm, the extreme values being included.

In preferred embodiments, the first diameter is substantially equal to about 0.22 mm.

Preferably, the second diameter is greater than or equal to about 0.175 mm, more preferably greater than or equal to about 0.22 mm.

Preferably, the second diameter is lower than or equal to about 0.36 mm, more preferably lower than or equal to about 0.34 mm.

Preferably, the second diameter is comprised between about 0.175 mm and about 0.36 mm, more preferably between about 0.22 mm and about 0.34 mm, the extreme values being included.

In preferred embodiments, the second diameter is substantially equal to about 0.30 mm.

Preferably, the winding pitch is lower than or equal to about 18 mm, more preferably lower than or equal to about 14 mm.

Preferably, the winding pitch is greater than or equal to about 8 mm, more preferably greater than or equal to about 10 mm.

Preferably, the winding pitch is comprised between about 8 mm and about 18 mm, more preferably between about 10 mm and about 14 mm, even more preferably between about 12 mm and about 13 mm, the extreme values being included.

In preferred embodiments, the winding pitch is equal to about 12.5 mm.

Preferably, said at least one reinforcing layer comprises a number of said reinforcing cords, in each decimetre of width of the reinforcing layer, greater than or equal to about 50, more preferably greater than or equal to about 60.

Preferably, said at least one reinforcing layer comprises a number of said reinforcing cords, in each decimetre of width of the reinforcing layer, smaller than or equal to about 150, more preferably smaller than or equal to about 140.

Preferably, said at least one reinforcing layer comprises a number of said reinforcing cords, in each decimetre of width of the reinforcing layer, comprised between about 50 and about 150, more preferably between about 60 and about 140, even more preferably between about 80 and about 130, even more preferably between about 90 and about 110, the extreme values being included.

For example, said at least one reinforcing layer comprises a number of said reinforcing cords, in each decimetre of width of the reinforcing layer, equal to about 110 or 130.

Preferably, the thickness of said at least one reinforcing layer is lower than or equal to about 1.2 mm, more preferably lower than or equal to about 1.0 mm.

Preferably, the thickness of said at least one reinforcing layer is greater than or equal to about 0.5 mm, more preferably greater than or equal to about 0.6 mm.

Preferably, the thickness of said at least one reinforcing layer is comprised between about 0.5 mm and about 1.2 mm, more preferably between about 0.6 mm and about 1.0 mm, even more preferably between about 0.7 mm and about 0.9 mm, the extreme values being included. For example, the thickness of said at least one reinforcing layer is equal to about 0.8 mm.

Preferably, said at least one reinforcing layer is a crossed belt layer of a belt structure of the tyre and said reinforcing cords are inclined by a predetermined angle of inclination with respect to a substantially circumferential direction of the tyre.

Preferably, said angle of inclination is greater than or equal to about 15°, more preferably greater than or equal to about 20°, even more preferably greater than or equal to about 23°.

Preferably, said angle of inclination is lower than or equal to about 45°, more preferably lower than or equal to about 40°, even more preferably lower than or equal to about 35°.

In preferred embodiments, said angle of inclination is comprised between about 15° and about 45°, more preferably between about 20° and about 40°, even more preferably between about 23° and about 35°, the extreme values being included.

For example, said angle of inclination can be equal to about 27°.

Preferably, said metallic wires are made of steel selected from NT (Normal Tensile) or HT (High Tensile), or ST (Super Tensile) or UT (Ultra Tensile).

Even more preferably said metallic wires are made of HT (High Tensile) or ST (Super tensile) steel.

### DESCRIPTION OF THE FIGURES AND OF PREFERRED EMBODIMENTS

Further characteristics and advantages of the tyre of the present invention will become clearer from the following detailed description of some preferred embodiments thereof, made with reference to the attached drawings. In such drawings:
- figure 1 is a schematic partial half cross-section view of a portion of a tyre according to an embodiment of the present invention;
- figure 2 is a perspective view of a segment of a reinforcing cord used in the belt structure of the tyre of figure 1;
- figure 3 is a load-elongation diagram of the reinforcing cord of figure 2 and of two reinforcing cords used in respective known tyres produced by the Applicant;
- figure 4 is a load-elongation diagram of two reinforcing layers comprising a plurality of reinforcing cords of figure 2 and of two reinforcing layers of the aforementioned known tyres produced by the Applicant.

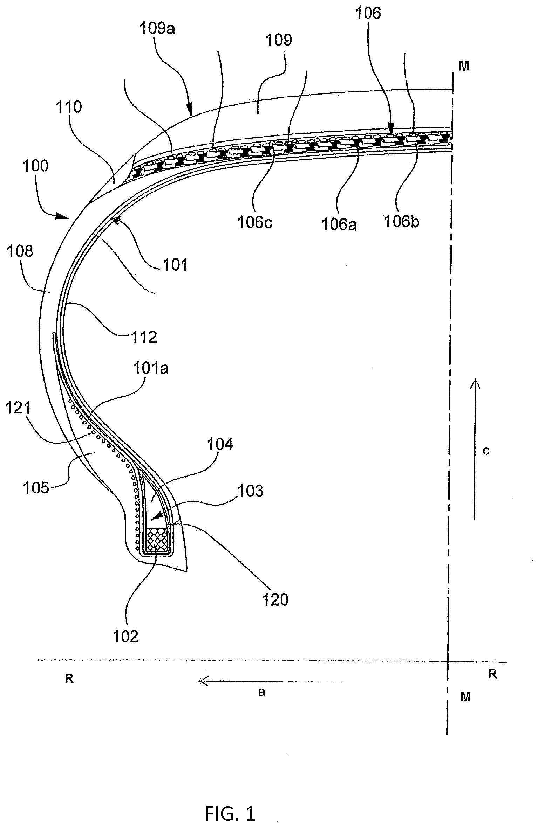

For the sake of simplicity, figure 1 shows only a part of an exemplifying embodiment of a tyre 100 in accordance with the present invention, the remaining part, which is not shown, being substantially identical and being arranged symmetrically with respect to the equatorial plane M-M of the tyre.

The tyre 100 of figure 1 is, in particular, an exemplifying embodiment of a tyre for four-wheeled vehicles.

Preferably, the tyre 100 is a HP or UHP tyre.

In figure 1 "a" indicates an axial direction, "c" indicates a radial direction, "M-M" indicates the equatorial plane of the tyre 100 and "R-R" indicates the rotation axis of the tyre 100.

The tyre 100 comprises at least one carcass structure 101, in turn comprising at least one carcass layer 111.

Hereinafter, for the sake of simplicity of presentation, reference will be made to an embodiment of the tyre 100 comprising a single carcass layer 111, being anyway understood that what is described has analogous application in tyres comprising more than one carcass layer.

The carcass layer 111 has axially opposite end edges engaged with respective annular anchoring structures 102, called bead cores, possibly associated with an elastomeric filler 104. The area of the tyre comprising the bead core 102 and the elastomeric filler 104 forms an annular reinforcing structure 103 called "bead" and configured to allow the tyre 100 to be anchored onto a corresponding mounting rim, not shown.

The carcass layer 111 comprises a plurality of reinforcing elements (not shown) coated with elastomeric material or incorporated in a matrix of cross-linked elastomeric material.

The carcass structure 101 is of the radial type, i.e. the reinforcing elements of the carcass layer 101 are located on planes comprising the rotation axis R-R of the tyre 100 and substantially perpendicular to the equatorial plane M-M of the tyre 100. Said reinforcing elements generally consist of textile cords, for example made of rayon, nylon, polyester, polyethylene naphthalate (PEN). However, the reinforcing elements can consist of metallic cords as well.

Each annular reinforcing structure 103 is associated with the carcass structure 101 through folding back (or turning) opposite side edges of the at least one carcass layer 111 around the bead core 102, so as to form the so-called turn up 101a of the carcass structure 101.

In an embodiment, the coupling between carcass structure 101 and annular reinforcing structure 103 can be made through a second carcass layer (not shown in figure 1) applied in an axially outer position with respect to the carcass layer 111.

An anti-abrasion strip 105 is arranged so as to envelop the annular reinforcing structure 103 along the axially inner and outer and radially inner areas of the annular reinforcing structure 103, thus being arranged between the latter and the rim of the wheel when the tyre 100 is mounted on the rim. Such an anti-abrasion strip 105 may, however, not be provided.

A belt structure 106 comprising one or more belt layers 106a, 106b arranged radially on top of one another is associated In a radially outer position with respect to the carcass structure 101.

The layers 106a, 106b comprise a plurality of reinforcing cords 10. Such reinforcing cords 10 preferably have a crossed orientation with respect to the circumferential direction of the tyre 100.

In a radially more outer position with respect to the belt layers 106a, 106b at least one zero degrees reinforcing layer 106c, commonly known as "zero degrees belt", can be applied. Such a layer generally incorporates a plurality of reinforcing cords oriented in a substantially circumferential direction. Such cords thus form an angle of a few degrees (typically lower than about 10°, for example comprised between about 0° and 6°) with respect to the equatorial plane M-M of the tyre 100.

The reinforcing cords 10 and the reinforcing cords of the zero degrees belt layer are coated with an elastomeric material or incorporated in a matrix of cross-linked elastomeric material.

A tread band 109 made of elastomeric material, like other semi-finished products constituting the tyre 100, is applied in a radially outer position with respect to the belt structure 106.

Respective sidewalls 108 made of elastomeric material are also applied to the side surfaces of the carcass structure 101, in an axially outer position with respect to the carcass structure 101 itself.

Each sidewall 108 extends from one of the side edges of the tread band 109 up to the respective annular reinforcing structure 103.

The anti-abrasion strip 105, if provided, extends at least up to the respective sidewall 108.

In some specific embodiments, like the one herein shown and described, the rigidity of the sidewall 108 can be improved by providing in the bead of the tyre a reinforcing layer 120 generally known as "flipper" or additional strip-like insert.

The flipper 120 is wound around the respective bead core 102 and the elastomeric filler 104 so as to at least partially surround them.

The flipper 120 is arranged between the carcass layer 111 and the annular reinforcing structure 103. Usually, the flipper is in contact with the carcass layer 101 and said annular reinforcing structure 103.

The flipper 120 typically comprises a plurality of metallic or textile cords incorporated in a cross-linked elastomeric material.

In some specific embodiments, like the one herein shown and described, the bead 103 can also comprise a further protective layer 121 that is generally known by the term "chafer", or protective strip, and which has the function of increasing rigidity and integrity of the annular reinforcing structure 103.

The chafer 121 usually comprises a plurality of cords incorporated in a cross-linked elastomeric material; such cords are generally made of textile material (for example aramid or rayon), or of metallic material (for example steel cords).

The tread band 109 has, in a radially outer position, a rolling surface 109a intended to come into contact with the ground. On the rolling surface 109a circumferential grooves are formed, which are connected by transverse cuts (not shown in figure 1) so as to define a plurality of blocks of various shapes and sizes on the rolling surface 109a.

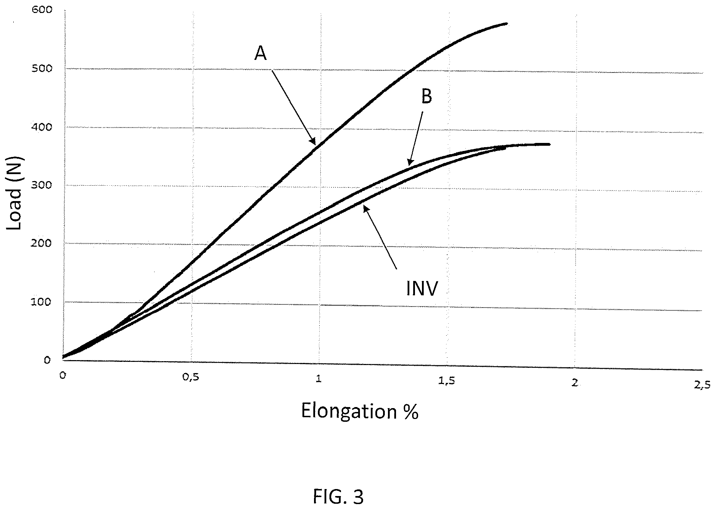

For the sake of simplicity, in figure 3 the rolling surface 109a is shown smooth.

A sub-layer 107 is arranged between the belt structure 106 and the tread band 109.

In some specific embodiments, like the one herein shown and described, a strip consisting of elastomeric material 110, commonly known as "mini-sidewall", can possibly be arranged in the area connecting the sidewalls 108 and the tread band 109. The mini-sidewall is generally obtained through co-extrusion with the tread band 109 and allows an improved mechanical interaction between the tread band 109 and the sidewalls 108.

Preferably, an end portion of the sidewall 108 directly covers the side edge of the tread band 109.

In the case of tubeless tyres, a rubber layer 112, generally known as "liner", can also be provided in a radially inner position with respect to the carcass layer 101 to provide the necessary impermeability to the inflation air of the tyre 100.

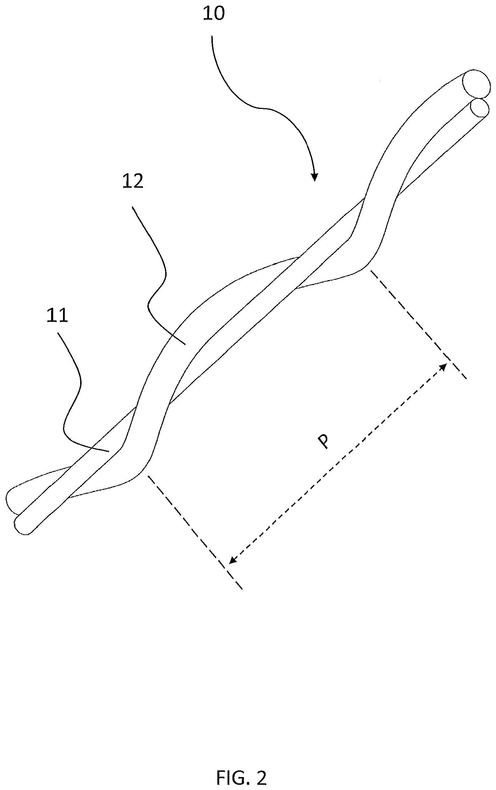

The reinforcing cords of the crossed belt layers 106a, 106b can be made as described above, each cord comprising a first metallic wire having a first diameter and a second metallic wire having a second diameter greater than the first diameter, wherein the first wire is substantially straight and the second wire is helically wound around the first wire with a predetermined winding pitch. They can thus consist of reinforcing cords 10 of the type shown in figure 2.

The cord 10 comprises a straight metallic wire 11 and a metallic wire 12 helically wound around the wire 11 with a predetermined winding pitch P.

The winding pitch P is preferably comprised between about 8 mm and about 18 mm, for example equal to about 12.5 mm.

Each or only one of the wires 11 and 12 can be individually twisted on itself with a predetermined twisting pitch that may or may not be equal to the winding pitch P.

In the preferred embodiments of the invention, none of the wires 11 and 12 is twisted on itself.

The wires 11 and 12 have a different diameter.

The ratio between the diameter of the wire 12 and the diameter of the wire 11 is comprised between about 1.12 and about 1.5.

In the preferred embodiments of the invention, the aforementioned ratio is substantially equal to about 1.36.

The wire 11 preferably has a diameter comprised between about 0.12 mm and about 0.32 mm, the extreme values being included.

In the preferred embodiments of the invention, the wire 11 has a diameter equal to about 0.22 mm.

The wire 12 preferably has a diameter comprised between about 0.175 mm and about 0.36 mm, the extreme values being included.

In the preferred embodiments of the invention, the wire 12 has a diameter equal to about 0.30 mm.

The cord 10 of figure 2 therefore has a construction identifiable with the symbology 1x0.22+1x0.30.

The Applicant has made the cord of the type 1x0.22+1x0.30 with the aim of obtaining both the good characteristics of integrity and structural strength typical of cords of the type 2x0.30 mm, and the excellent characteristics of rolling resistance, drivability and comfort typical of cords of the type 3x0.22 mm.

The Applicant has found that the cord of the type 1x0.22+1x0.30 has excellent characteristics in terms of penetrability of the compound. This is thanks to the fact that the wire of diameter equal to 0.30 mm only partially covers the wire of diameter equal to 0.22 mm along the longitudinal extension thereof.

The Applicant has also found that the cord of the type 1x0.22+1x0.30 has excellent characteristics in terms of fatigue resistance.

The diameter of the cord 10 is given by the sum of the diameters of the wires 11 and 12. In the preferred embodiments of the invention, such a diameter is therefore equal to about 0.52 mm.

The area of the overall section of the cord 10 preferably is comprised between about 0.035 mm² and about 0.182 mm².

The cord 10 can have a breaking load equal to about 370 N and/or a percentage elongation at break equal to about 1.8%.

In the preferred embodiments of the invention, the cord 10 of figure 2 is used in both of the belt layers 106a, 106b.

In this case, the cords 10 of each layer 106a, 106b are inclined by a predetermined angle of inclination with respect to the circumferential direction of the tyre 100.

Such an angle of inclination is comprised between about 15° and about 45°, preferably between about 20° and about 40°, more preferably between about 23° and about 35°, the extreme values being included. For example, such an angle is equal to about 27°. The angles of inclination of the cords of the two adjacent belt layers 106a, 106b are preferably opposite with respect to the circumferential direction of the tyre 100.

The Applicant has found that when the angle of inclination of the cords 10 is within the aforementioned ranges of values, drivability when cornering (measured for example at 100 Km/h in a bend) and drivability in a straight line (meaning detection of small movements under the footprint area and measured for example at 100 km/h in a straight line) are optimised.

Preferably, each belt layer 106a, 106b comprises a number of said cords 10, per linear decimetre of width of the reinforcing layer, comprised between about 50 and about 150, preferably between about 60 and about 140, even more preferably between about 80 and about 130, the extreme values being included.

In the preferred embodiments of the invention, said number is equal to about 110 or 130.

The wires 11 and 12 are coated with a layer of elastomeric material having a thickness preferably lower than about 1.2 mm, more preferably lower than about 1.0 mm. Preferably, the thickness of said layer is greater than about 0.5 mm, more preferably greater than about 0.6 mm.

For example, the thickness of the aforementioned layer is equal to about 0.8 mm.

In this way, an optimisation is obtained between the rubber-coating of the wires 11 and 12 and density thereof in the reinforcing layer.

The thickness of the elastomeric coating layer of the wires 11 and 12 defines the thickness of the reinforcing layer incorporating the cords 10.

In a preferred embodiment thereof, the wires 11 and 12 are made of steel with high carbon content. In particular, HT or ST or UT steel is used in order to give the cord particular resistance to compression, as well as to traction.

The cord 10 of figure 2 can also be used in embodiments of tyres different from those of figure 1. Such tyres can be summer, winter or "all season" tyres.

The Applicant has subjected a cord 10 of the type described above to traction according to the aforementioned international method BISFA E6.

The cord 10 tested is made through a first straight wire made of ST steel having a diameter equal to 0.22 mm and a second wire of ST steel having a diameter equal to about 0.30 mm helically wound around the straight wire with a winding pitch equal to about 12.5 mm (hereinafter also indicated as "cord INV").

The Applicant compared the behaviour of such a cord with that of the aforementioned cords of the type 2+1x0.28NT (hereinafter also indicated as "cord A") and of the type 3x0.22HT (hereinafter also indicated as "cord B").

The test was carried out according to the standard BISFA E6 blocking the samples at the ends thereof between clamps, applying a pre-load of 5N and subsequently applying a separation speed of the pliers of 100 mm/min until the sample broke.

In cord A the steel wire that is helically wound has a left-handed winding pitch equal to 16 mm.

In cord B the three steel wires are twisted together with left-handed winding pitch equal to 12.5 mm.

Table 1 below indicates the mechanical characteristics of the three cords subjected to testing.

**TABLE 1**

| Cord | Cord diameter | Linear density | Load at break | Elongation at break |
|---|---|---|---|---|
| | [mm] | [kTex] | [N] | [%] |
| A | 0.70±0.03 | 1.45±5% | 530 | 1.80±0.15 |
| B | 0.47±0.05 | 0.91±5% | 360 | 1.90±0.10 |
| INV | 0.52±0.03 | 0.86±5% | 370 | 1.80±0.15 |

The percentage load-elongation behaviour of the aforementioned cords is shown in the graph of figure 3.

From the graph of figure 3 and from table 1 it can be seen that the value of the break load of the cord INV is close to that of the cord B. It can also be seen that the load/elongation curves of the two cords INV and B are close to each other.

It can also be sees that the elongation at break of the cord INV is equal to that of the cord A.

The Applicant has made a reinforcing layer A1 comprising 98 cords A (with a thickness of the elastomeric material around the cord equal to 1.05 mm), a reinforcing layer B1 comprising 110 cords B (with a thickness of the elastomeric material around the cord equal to 0.90 mm), a reinforcing layer INV1 comprising 110 cords INV (with a thickness of the elastomeric material around the cord equal to 0.80 mm) and a reinforcing layer INV1bis comprising 130 cords INV (with a thickness of the elastomeric material around the cord equal to 0.80 mm).

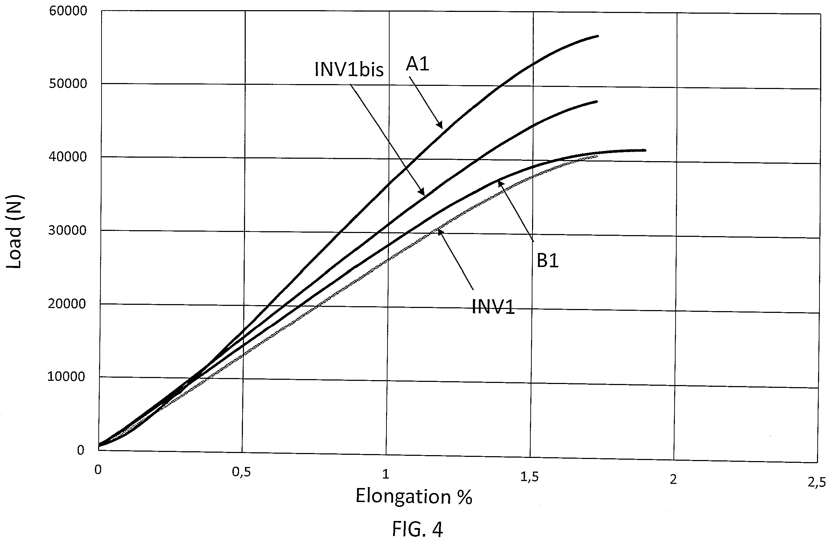

Table 2 below indicates the technical characteristics of the aforementioned reinforcing layers, whereas the percentage load-elongation behaviour of the aforementioned reinforcing layers is shown in the graph of figure 4.

**TABELLA 2**

| Reinforcing layer | Weight of steel per m² of reinforcing layer | Weight of elastomeric material per m² of reinforcing layer | Total weight per m² of reinforcing layer | Space between cords | Space above and below layer |
|---|---|---|---|---|---|
| | [g/m²] | [g/m²] | [g/m²] | [mm] | [mm] |
| A1 | 1430 | 1030 | 2460 | 0.32 | 0.18 |
| B1 | 1010 | 900 | 1910 | 0.44 | 0.22 |
| INV1 | 950 | 790 | 1740 | 0.39 | 0.14 |
| INV1bis | 1130 | 760 | 1890 | 0,25 | 0.14 |

From the graph of figure 4 it can be seen that by increasing the number of cords in the reinforcing layer (from 110 to 130) the behaviour of the reinforcing layer in terms of structural resistance to traction loads increases, reaching an improved condition with respect to that obtained in the case in which the reinforcing layer comprises cords B and approaching the excellent behaviour obtained in the case in which the reinforcing layer comprises cords A.

In order to evaluate the behaviour of the tyre 100 of the present invention in terms of rolling resistance, drivability and comfort, and resistance to external stresses (Plunger test), the Applicant has carried out some comparative tests comparing tyres comprising, in the respective belt structures, the reinforcing layer INV1 (such tyres thus corresponding to the tyre 100 of the present invention and hereinafter indicated as "tyres TINV1) and the reinforcing layer INV1bis (such tyres also thus corresponding to the tyre 100 of the present invention and hereinafter indicated as "tyres TINV1bis") with the known tyres comprising, in their belt structures, the reinforcing layer B1 (hereinafter "tyres TB1"). The tyres TINV1 and TINV1bis differ from the tyres TB1 only for the different type of cord used in the respective belt structures.

In a first series of tests, the behaviour of the aforementioned tyres in terms of rolling resistance was evaluated.

In such tests the tyres TINV1, TINV1bis and TB1 all were of size 205/55 R16. The tyre TB1 had a weight equal to 8.25 kg and 110 cords B, the tyre TINV1 a weight equal to 7.90 kg and 110 cords INV and the tyre TINV1bis a weight equal to 8.00 kg and 130 cords INV.

Table 3 below schematises the result of these tests.

**TABLE 3**

| Tyre | Rolling resistance |
|---|---|
| TB1 | 100 |
| TINV1 | 107 |
| TINV1bis | 106 |

In a second series of tests, the behaviour of the aforementioned tyres was evaluated, not only in terms of rolling resistance, but also in terms of drivability and Plunger test, again taking an index 100 as reference. An increase with respect to 100 under the entry "Drivability" indicates an advantageous percentage improvement in drivability and an increase with respect to 100 under the entry "Plunger test" indicates an advantageous percentage improvement in static compression resistance.

In such tests the tyres were all of size 225/55 R17. The tyre TB1 had a weight equal to 11.90 kg, the tyre TINV1 a weight equal to 11.60 kg and the tyre TINV1bis a weight equal to 11.70 kg.

Table 4 below schematises the result of these tests.

**TABELLA 4**

| Tyre | Rolling resistance | Drivability | Plunger test |
|---|---|---|---|
| TB1 | 100 | 100 | 100 |
| TINV1 | 104 | 104 | 110 |
| TINV1bis | 103 | 105 | 146 |

The tests which have been carried out highlighted that the tyre 100 of the invention has, for the same number of cords in the belt layer, behaviour in terms of rolling resistance and drivability that is better than the already excellent behaviour of tyres comprising cords of the type 3x0.22. The tests also highlighted that the tyre 100 of the invention has, for the same number of cords in the belt layer, mechanical characteristics, in terms both of integrity and structural strength, that are better than those of tyres in which reinforcing cords of the type 3x0.22 are used and that therefore they can reasonably be considered comparable to those obtained using cords of the type 2+1x0.28 or 2x0.30. The improvement in the mechanical characteristics increases as the number of cords of the belt layer increases.

Such results are surprising. Indeed, the Applicant considered that the cord of the type 1x0.22+1x0.30 would not have been suitable for withstanding high traction loads since such loads would have been almost totally borne by the wire of smaller diameter, which would have been oriented precisely along the direction of traction. According to the Applicant, the wire with a diameter equal to 0.22 mm, once subjected to the aforementioned traction load, would indeed have elongated to break before the intervention of the wire with a greater diameter. The Applicant would therefore have expected a load-elongation behaviour very different from the one characteristic of a cord having two wires of the same diameter.

The Applicant also though that the presence in the cord of the type 1x0.22+1x0.30 of a wire having a relatively high diameter (0.30 mm) would have led to a worsening of the behaviour of the tyre in terms of rolling resistance, drivability and comfort with respect to the excellent behaviour of the cords of the type 3x0.22.

Surprisingly, the Applicant has found that the cord of the type 1x0.22+1x0.30 has, for the same amount of steel, a load-elongation behaviour very similar to that of the cord 2x0.30 (which as known allows good characteristics of structural strength to be obtained) and allows obtaining a behaviour in terms of rolling resistance, drivability and comfort that is better than the already excellent behaviour obtained using cords of the type 3x0.22.

Without wishing to be bound to any interpretative theory, according to the Applicant the surprising results obtained using the cord of the type 1x0.22+1x0.30 are attributable to the fact that, when the latter is subjected to traction, the two wires of the cord work in synergy, providing a resulting improved effect with respect to that which would have been obtained if the two wires had worked independently.

In particular, the Applicant believes that when the cord of the type 1x0.22+1x0.30 is subjected to a traction load, there is, at the same time as the traction of the wire with a diameter equal to 0.22 mm, an unwinding of the wire with a diameter equal to 0.30 mm over the wire with a diameter equal to 0.22. Through the effect of such unwinding a part of the traction load applied to the cord is borne by the wire with a diameter equal to 0.30 mm, thus reducing the amount of load borne by the cord with a diameter equal to 0.22 mm and providing a beneficial effect in terms of structural strength and integrity. In practice, according to the Applicant when the cord is subjected to traction, the two wires work at the same time, in a way totally similar to what happens in cords of the type 2x0.30. This conviction is confirmed by the fact - as verified by the Applicant - that the breaking of the wire with a diameter equal to 0.22 mm takes place only slightly before the breaking of the wire with a diameter equal to 0.30 mm. According to the Applicant, such almost simultaneous breaking is due to the fact that when the wire with a smaller diameter breaks, the excess load moves onto the wire with a greater diameter, which then breaks immediately after.

The Applicant also believes that the unwinding of the wire with a diameter equal to 0.30 mm over the wire with a diameter equal to 0.22 mm gives the wire with a diameter equal to 0.30 an elastic component that the latter does not have when it is in a rest condition. Such an elastic component produces a beneficial effect in terms of rolling resistance, drivability and comfort.

The synergic action of the two wires discussed above is confirmed by the fact that the Applicant found that when the wire with a diameter equal to 0.22 mm breaks, it partially unwinds, as if it had also been twisted. The Applicant attributes this phenomenon to the fact that the unwinding of the wire with a diameter equal to 0.30 mm upon the application of a traction load on the cord produces a twisting of the wire with a diameter equal to 0.22 mm, which allows the latter both to withstand the traction load for a longer time before breaking, and to improve rolling resistance, drivability and comfort.

The results of the tests carried out by the Applicant thus confirm that with the tyre 100 of the present invention, thanks to the particular construction of the cords used in the belt structure, it is possible to obtain excellent behaviour both in terms of integrity and structural strength and in terms of rolling resistance, drivability and comfort, obtaining a general behaviour that is better than that of the tyres currently used by the Applicant and/or known to the Applicant in which, on the other hand, one is obliged to accept compromises.

The present invention has been described with reference to some preferred embodiments. Different modifications can be brought to the embodiments described above, still remaining within the scope of protection of the invention, which is defined by the following claims.

With this respect, hereinafter some examples of tyres are given, wherein the crossed belt layers are made with reinforcing cords of the type described above, each cord comprising a first metallic wire having a first diameter and a second metallic wire having a second diameter greater than the first diameter, in which the first wire is substantially straight and the second wire is helically wound around the first wire with a predetermined winding pitch:
- Tyres 275/45 R20, for example to equip high-powered SUV vehicles, having crossed belts made with cords 1x0.30+1x0.35, with density of 85 cords/dm;
- Tyres 215/60 R15, for example to equip sports vehicles (for example rally cars), having crossed belts made with cords 1x0.15+1x0.20, with density of 110 cords/dm;
- Tyres 135/70 R13, for example to equip utility passenger cars and/or electric vehicles, having crossed belts made with cords 1x0.12+1x0.175, with density of 110 cords/dm.

## Claims

1. Tyre (100) for vehicle wheels, comprising a belt structure comprising at least one reinforcing layer having a plurality of reinforcing cords, **characterised in that** each reinforcing cord (10) of said plurality of reinforcing cords comprises only two metallic wires, a first metallic wire (11) having a first diameter and a second metallic wire (12) having a second diameter greater than the first diameter, wherein the first wire (11) is substantially straight and the second wire (12) is helically wound around the first wire (11) with a predetermined winding pitch (P).

2. Tyre (100) according to claim 1, wherein the difference between the second diameter and the first diameter is comprised between about 0.03 mm and about 0.09 mm, the extreme values being included.

3. Tyre (100) according to claim 1 or 2, wherein the ratio between the second diameter and the first diameter is comprised between about 1.12 and about 1.55, the extreme values being included.

4. Tyre (100) according to any one of the previous claims, wherein the first diameter is comprised between about 0.12 mm and about 0.32 mm, the extreme values being included.

5. Tyre (100) according to any one of the previous claims, wherein the first diameter is substantially equal to about 0.22 mm.

6. Tyre (100) according to any one of the previous claims, wherein the second diameter is comprised between about 0.175 mm and about 0.36 mm, the extreme values being included.

7. Tyre (100) according to any one of the previous claims, wherein the second diameter is substantially equal to about 0.30 mm.

8. Tyre (100) according to claim 7, wherein the ratio between the second diameter and the first diameter is substantially equal to about 1.36.

9. Tyre (100) according to any one of the previous claims, wherein the winding pitch (P) is comprised between about 8 mm and about 18 mm, the extreme values being included.

10. Tyre (100) according to any one of the previous claims, wherein the winding pitch (P) is equal to about 12.5 mm.

11. Tyre (100) according to any one of the previous claims, wherein said at least one reinforcing layer comprises, in each decimetre of width of the reinforcing layer, a number of said reinforcing cords (10) comprised between about 50 and about 150, the extreme values being included.

12. Tyre (100) according to any one of the previous claims, wherein said at least one reinforcing layer comprises a number of said reinforcing cords (10) equal to about 110 or 130.

13. Tyre (100) according to any one of the previous claims, wherein the thickness of said at least one reinforcing layer is comprised between about 0.5 mm and about 1.2 mm, the extreme values being included.

14. Tyre (100) according to any one of the previous claims, wherein said at least one reinforcing layer is a crossed belt layer (106a, 106b) of a belt structure (106) of the tyre (100) and wherein said reinforcing cords (10) are inclined by a predetermined angle of inclination with respect to a substantially circumferential direction of the tyre (100).

15. Tyre (100) according to any one of the previous claims, wherein said first wire (11) and second wire (12) are made of NT or HT or ST or UT steel.

## Patentansprüche

1. Reifen (100) für Fahrzeugräder, umfassend eine Gürtelstruktur umfassend zumindest eine Verstärkungslage mit einer Vielzahl von Verstärkungskorden, **dadurch gekennzeichnet, dass** jeder Verstärkungskord (10) der Vielzahl von Verstärkungskorden nur zwei Metalldrähte umfasst, einen ersten Metalldraht (11) mit einem ersten Durchmesser, und einen zweiten Metalldraht (12) mit einem zweiten Durchmesser, der größer ist als der erste Durchmesser, wobei der erste Draht (11) im Wesentlichen gerade ist, und der zweite Draht (12) mit einem vorbestimmten Wickelschritt (P) spiralförmig um den ersten Draht (11) gewickelt ist.

2. Reifen (100) nach Anspruch 1, wobei die Differenz zwischen dem zweiten Durchmesser und dem ersten Durchmesser zwischen etwa 0,03 mm und etwa 0,09 mm liegt, wobei die Extremwerte eingeschlossen sind.

3. Reifen (100) nach Anspruch 1 oder 2, wobei das Verhältnis zwischen dem zweiten Durchmesser und dem ersten Durchmesser zwischen etwa 1,12 und etwa 1,55 liegt, wobei die Extremwerte eingeschlossen sind.

4. Reifen (100) nach einem der vorhergehenden Ansprüche, wobei der erste Durchmesser zwischen etwa 0,12 mm und etwa 0,32 mm beträgt, wobei die Extremwerte eingeschlossen sind.

5. Reifen (100) nach einem der vorhergehenden Ansprüche, wobei der erste Durchmesser im Wesentlichen gleich etwa 0,22 mm ist.

6. Reifen (100) nach einem der vorhergehenden Ansprüche, wobei der zweite Durchmesser zwischen etwa 0,175 mm und etwa 0,36 mm beträgt, wobei die Extremwerte eingeschlossen sind.

7. Reifen (100) nach einem der vorhergehenden Ansprüche, wobei der zweite Durchmesser im Wesentlichen gleich etwa 0,30 mm ist.

8. Reifen (100) nach Anspruch 7, wobei das Verhältnis zwischen dem zweiten Durchmesser und dem ersten Durchmesser im Wesentlichen gleich etwa 1,36 ist.

9. Reifen (100) nach einem der vorhergehenden Ansprüche, wobei der Wickelschritt (P) zwischen etwa 8 mm und etwa 18 mm beträgt, wobei die Extremwerte eingeschlossen sind.

10. Reifen (100) nach einem der vorhergehenden Ansprüche, wobei der Wicklungsabstand (P) gleich etwa 12,5 mm ist.

11. Reifen (100) nach einem der vorhergehenden Ansprüche, wobei die zumindest eine Verstärkungslage in jedem Dezimeter der Breite der Verstärkungslage eine Anzahl der Verstärkungskorde (10) zwischen etwa 50 und etwa 150 umfasst, wobei die Extremwerte eingeschlossen sind.

12. Reifen (100) nach einem der vorhergehenden Ansprüche, wobei die zumindest eine Verstärkungslage eine Anzahl der Verstärkungskorde (10) gleich etwa 110 oder 130 umfasst.

13. Reifen (100) nach einem der vorhergehenden Ansprüche, wobei die Dicke der zumindest einen Verstärkungslage zwischen etwa 0,5 mm und etwa 1,2 mm beträgt, wobei die Extremwerte eingeschlossen sind.

14. Reifen (100) nach einem der vorhergehenden Ansprüche, wobei die zumindest eine Verstärkungslage eine gekreuzte Gürtellage (106a, 106b) einer Gürtelstruktur (106) des Reifens (100) ist, und wobei die Verstärkungskorde (10) um einen vorbestimmten Schrägwinkel in Bezug auf eine im Wesentlichen umlaufende Richtung des Reifens (100) schräg sind.

15. Reifen (100) nach einem der vorhergehenden Ansprüche, wobei der erste Draht (11) und der zweite Draht (12) aus NT- oder HT- oder ST- oder UT-Stahl bestehen.

## Revendications

1. Pneu (100) pour roues de véhicule, comprenant une structure de ceinture qui comprend au moins une couche de renfort ayant une pluralité de câblés de renfort, **caractérisé en ce que** chaque câblé de renfort (10) de ladite pluralité de câblés de renfort ne comprend que deux fils métalliques, un premier fil métallique (11) ayant un premier diamètre et un deuxième fil métallique (12) ayant un deuxième diamètre supérieur au premier diamètre, où le premier fil (11) est essentiellement droit et le deuxième fil (12) est enroulé de manière hélicoïdale autour du premier fil (11) avec un pas d'enroulement prédéterminé (P).

2. Pneu (100) selon la revendication 1, dans lequel la différence entre le deuxième diamètre et le premier diamètre est comprise entre environ 0,03 mm et environ 0,09 mm, les valeurs extrêmes étant incluses.

3. Pneu (100) selon la revendication 1 ou 2, dans lequel le rapport entre le deuxième diamètre et le premier diamètre est compris entre environ 1,12 et environ 1,55, les valeurs extrêmes étant incluses.

4. Pneu (100) selon l'une quelconque des revendications précédentes, dans lequel le premier diamètre est compris entre environ 0,12 mm et environ 0,32 mm, les valeurs extrêmes étant incluses.

5. Pneu (100) selon l'une quelconque des revendications précédentes, dans lequel le premier diamètre est essentiellement égal à environ 0,22 mm.

6. Pneu (100) selon l'une quelconque des revendications précédentes, dans lequel le deuxième diamètre est compris entre environ 0,175 mm et environ 0,36 mm, les valeurs extrêmes étant incluses.

7. Pneu (100) selon l'une quelconque des revendications précédentes, dans lequel le deuxième diamètre est essentiellement égal à environ 0,30 mm.

8. Pneu (100) selon la revendication 7, dans lequel le rapport entre le deuxième diamètre et le premier diamètre est essentiellement égal à environ 1,36.

9. Pneu (100) selon l'une quelconque des revendications précédentes, dans lequel le pas d'enroulement (P) est compris entre environ 8 mm et environ 18 mm, les valeurs extrêmes étant incluses.

10. Pneu (100) selon l'une quelconque des revendications précédentes, dans lequel le pas d'enroulement (P) est égal à environ 12,5 mm.

11. Pneu (100) selon l'une quelconque des revendications précédentes, dans lequel ladite au moins une couche de renfort comprend, dans chaque décimètre de largeur de la couche de renfort, un certain nombre desdits câblés de renfort (10) compris entre environ 50 et environ 150, les valeurs extrêmes étant incluses.

12. Pneu (100) selon l'une quelconque des revendications précédentes, dans lequel ladite au moins une couche de renfort comprend un certain nombre desdits câblés de renfort (10) égal à environ 110 ou 130.

13. Pneu (100) selon l'une quelconque des revendications précédentes, dans lequel l'épaisseur de ladite au moins une couche de renfort est comprise entre environ 0,5 mm et environ 1,2 mm, les valeurs extrêmes étant incluses.

14. Pneu (100) selon l'une quelconque des revendications précédentes, dans lequel ladite au moins une couche de renfort est une couche de ceinture croisée (106a, 106b) d'une structure de ceinture (106) du pneu (100) et dans lequel lesdits câblés de renfort (10) sont inclinés d'un angle d'inclinaison prédéterminé par rapport à une direction essentiellement circonférentielle du pneu (100).

15. Pneu (100) selon l'une quelconque des revendications précédentes, dans lequel ledit premier fil (11) et ledit deuxième fil (12) sont constitués d'acier NT ou HT ou ST ou UT.
